# EUROPEAN PATENT APPLICATION

(11) **EP 4 625 344 A1**
(43) Date of publication of application: **01.10.2025**
(21) Application number: 24167341.7
(22) Date of filing: 28.03.2024
(51) Int. Cl.: G06V 10/25, G06V 10/80, G06V 20/52

(54) **METHODS AND APPARATUS FOR OBJECT DETECTION AND TRACKING**

(71) Applicant: Helsing GmbH, 81671 Munich (DE)
(72) Inventor: MAFLA DELGADO, Andrés, 81671 Munich (DE); SCHMAUSER, Dominik, 81671 Munich (DE); DEY, Sounak, 81671 Munich (DE)
(74) Representative: Rummler, Felix

(57) **Abstract**

According to one aspect of the present disclosure, there is provided a computer-implemented method for object detection, the method comprising: performing a first detection step in a first image of a sequence of images to detect at least one object; determining a second image from the sequence of images wherein the second image is the same first image or temporally follows the first image; selecting a sub-image of the second image in which the at least one object has been detected in the first detection step; and performing a second detection step to detect the at least one object in the selected sub-image.

## Description

### Field

The present disclosure generally relates to object detection and tracking. In particular, the present disclosure relates to methods, and devices for object detection and tracking.

### Background

It is generally known how to use image recognition technology to recognize objects in images and it is further generically well known how to extend image recognition to the objects tracking across multiple images. A wide range of deep neural networks models have been proposed to accomplish these tasks.

However, the existing models for both object recognition and object tracking are computationally very expensive tasks, requiring a large amount of computation and energy to be accomplished. Furthermore, they tend to fail when the objects to recognize are small objects, such as objects far away from the camera. This problem becomes more acute during tracking when the tracked objects move quickly and potentially erratically. Thus, for example, the detection of drones in security systems or birds in nature monitoring systems remains a very challenging task.

Consequently, methods are required that reduce the runtime requirements of image detection and tracking and still provide highly accurate results. Moreover, tracking methods should be self-monitoring: these methods should include steps that verify the correctness of their detection, detect failures when the tracked object is no longer visible, and provide recovery mechanisms when a failure is detected. Additionally, these methods should provide ways to balance these requirements to dynamically balance the trade-offs between computational requirements, accuracy, and speed of response.

The present invention relates to methods, systems and devices for enabling object detection and tracking while reducing computational effort and consequently energy requirements of the recognition devices.

### Summary of the Invention

The present invention is defined in the independent claims. The dependent claims recite selected optional features. In the following, each of the described methods, systems, apparatuses, examples, and aspects, which do not fully correspond to the invention as defined in the claims is thus not according to the invention and is, as well as the whole following description, present for illustration purposes only or to highlight specific aspects or features of the claims.

According to a first aspect of the present disclosure, there is provided a method for the detection of objects, which may potentially be small objects, in a sequence of images. The potentially small object may be a faraway flying drone which may be flying near an airport and thus potentially become a danger for the local air traffic. The disclosed detection method includes performing a first detection step in a first image of the sequence of images to detect at least one object, for example the exemplary drone. In other words, the first detection step may scan a first image of a sequence of images to detect whether the drone appears in the first image. The method further includes selecting a second image from the sequence of images, wherein the second image may be the first image or an image temporally following the first image. The method further includes selecting a sub-image of the second image at an area in which the at least one object has been detected in the first detection step. The method further includes performing a second object detection step to detect the at least one object in the selected sub-image. As far as a plurality of objects are detected, a respective sub-image of the second image may be selected at an area in which the respective object has been detected in the first detection step. The second object detection step may be considered a confirmation step to verify whether the object is present in the second image without repeating the search on the whole image. The proposed method may provide a way to focus the computation effort, with a first detection step that may provide a first rough analysis of the first image and a more focused and precise second detection step that performs a more detailed analysis only on limited areas of the second image.

In some examples in which the second image is not the first image, determining the second image comprises selecting the second image from the sequence of images.

In some examples, selecting the sub-image of the second image may include determining a bounding box of the at least one object that has been detected in the first detection step; wherein the bounding box may be determined in the first image, projecting said bounding box onto the second image; determining the sub-image of the second image as a sub-image of the second image centred on the identified position of the bounding box in the second image, wherein a size of the sub-image may be based on a size of the bounding box.

In some examples, the outputs of the first detection step include the bounding box. The bounding box may indicate the spatial location of the at least one detected object within the first image. This bounding box may be used to determine the sub-image on which the detection of the second detection step is centred and to detect the area on which to perform the tracking procedure.

In some examples, the size of the sub-image may be a multiple of the size of the bounding box, or it may be determined based on other conditions, such as the speed of the object and the direction of movement of the object.

In some examples, projecting the bounding box in the second image comprises determining a bounding box in the second image that corresponds to the relative size and position of the bounding box within the first image or a bounding box centred on the relative position of the detected object in the first image, or a bounding box centred on the expected position of the detected object in the second image. Therefore, the detected object may be kept approximately in the centre of the sub-image.

In some examples, the sub-image may be altered to facilitate the detection of the object. Examples of alterations may include enlarging the sub-image, and/or increasing the resolution of the selected sub-image or other computer graphics processes.

In some examples, the first detection step may be based on a detection process that uses a pre-trained Feature Pyramid Network, FPN.

In some examples, the first and second detection steps are based on the same detection process. However, in some examples the second detection step, which may function as confirmation process, may be based on a different detection process than the first detection step. For example, the first detection step may be based on a first algorithm, while the second detection step may be based on a different algorithm. Or both detection steps may be based on the same algorithm, for example the FPN cited above, but the first and the second detection steps are based on different parametrizations of the same algorithm. It is preferred to use a faster algorithm for the first detection step, which is performed on the whole first image, and a more accurate algorithm, which is performed on the sub-image, which is preferably smaller than the first image.

In some examples, the computer-implemented method may further include the selection of respective one or more subsequent sub-images of one or more subsequent images temporally following the second image of the sequence of images, wherein relative sizes and/or positions of the subsequent sub-images within the subsequent images are updated for each subsequent sub-image or respectively correspond to a relative size and/or position of the sub-image within the second image. In that manner, computing resources can be saved. The sub-image is preferably chosen such that the detected object will not, or is unlikely to, leave the area defined by the sub-image. In this example, the method further comprises tracking the detected object within the subsequent sub-images.

The detected object may be moving, and it may be of interest to track its movements. To this extent, subsequent sub-images may be selected to enable the tracking of the object through multiple images. Furthermore, since the sequence of images scans the passage of time, the tracking of the object results in tracking the object in time.

It is preferred to choose the relative position of each of the sub-image such that it is centred around a position of the object on a preceding sub-image. The size of the sub-image is preferably chosen such that between two consecutive images the detected object may likely still be detected in a sub-image with the same relative position and size in a subsequent image. In that manner, the detected (and tracked) object may be kept approximately in the centre of the sub-image. Furthermore, object tracking may not be performed on every immediately subsequent image, but it may be performed on every n-th image of the sequence of images. The first and second detection steps may be performed at every m-th image, with m>n. This is advantageous because the first detection step may be performed on the entire image, whereas tracking can be limited to the sub-images and can therefore be faster and thus be performed at a higher rate. An additional advantage of sub-images is that it leads to saving resources because the search of the object is limited to a sub-image instead of all the image.

In some examples, the image may be partitioned into image tiles and the first detection step may be performed on each of the image tiles. The one or more objects detected by the first detection step may be the union of the objects detected in each of the image tiles.

The partitioning of the image in different image tiles may enable parallelization of the first detection step because the first detection step may be performed on each one of the tiles concurrently, i.e., in parallel; thus, the computation time may be greatly reduced.

In some examples, the method further comprises indexing the image tiles of the first image based on their relative position to one another. The indexing of a sub-image tile may indicate a unique id of the tile and possibly the id of the tiles nearby. For example, assuming the 4x4 grid, image 6 (the image on the second row and second column) may be indexed by indicating that image 5 is on the left, image 7 on the right, image 2 above and image 10 below. In some examples, image 6 may be indexed as (2,2), and the nearby sub-image tiles may be simply derived as (2,1), (1,2) (2, 3), (3,2). This indexing satisfies the two properties of unique indexing, and relative positioning.

In some examples, the resolution of the high-resolution image may be 8K or higher. The image tiles that may be derived by dividing the first high-resolution image in a 4x4 grid may be of a full HD image resolution or higher resolution.

In some examples, the first detection step may be performed in a first image and the second detection step in a second subsequent image. Therefore, the sub-image may be selected from a second image which follows the first image temporally. Since the object may have moved in the time between the first and the second image, the size of the sub-image may need to be wide to account for the movement of the object. On the other hand, a wider sub-image may require more computation in the second detection step. Thus, the size of the sub-image may need to be determined by trading the (predetermined) likelihood of finding the object in the sub-image and the need of minimizing computation. The determination of the size of the sub-image may be constrained by an upper and lower threshold that may constrain the range of possible sizes of the sub-image, thus facilitating the search for the sub-image.

Preferably, the lower threshold is chosen by determining a movement, in particular a speed of the object and multiplying the movement/speed by a temporal interval between the first image and the second image. The movement/speed may be received from an external measuring device, derived from any available data related to earlier tracking of the object, or determined as a typical movement/speed based on a classification and/or distance of the object. Preferably, the upper threshold is chosen as a maximum size of an image that can be processed by an algorithm using the available computing resources.

In some examples, the computer-implemented method may further include tracking the at least one detected object in the sequence of images based on the outputs of the first and second detection steps; wherein tracking the at least one detected object preferably comprises iteratively executing the following steps:
- selecting a next image from the sequence of images;
- predicting a position of the at least one detected object in said the selected next image;
- specifying a vicinity-area-image, as a sub-image of said the selected next image, centred on the identified position of the at least one detected object in said the selected next image, preferably wherein the size of the vicinity-area-image may be based on the size of the or a bounding box of the detected object;
- detecting the at least one object in the vicinity-area-image; and
- preferably, computing a new bounding box for the at least one detected object in the vicinity-area-image for a subsequent iteration.

The tracking method may enable the tracking of objects detected in the first and second detection steps individually across images. Further, the tracking method may include the definition of a vicinity area image based on the bounding box of the object in the first image.

The vicinity area image may be a sub-image of the selected image, centred in the bounding box, and of size larger than the bounding box. Furthermore, the vicinity area image may be a portion of the selected image in which may be likely to find the tracked object. The size of the vicinity-area-image may be based on the size of the bounding box of the detected object and may be defined as 5x the size of the bounding box.

In some examples, the first detection step, the second detection step, and/or detecting the at least one object in the vicinity-area-image further comprises computing a confidence value. The confidence value provides a measure of the degree of confidence that the respective detection step has in the detection of the object. When the confidence value is too low, in other words below a predefined threshold, the object detection cannot be trusted. In response to such a determination, the method is restarted. To do so, the method goes on to perform the first detection step on a further image temporally following the first image, sub-image, or vicinity-area-image. In other words, any tracking that may have begun is aborted. Then, the first and second detection steps may be performed anew on a further image, thereby processing the entire image to correctly locate the object again, or to confirm that the object is not present on later images. This is advantageous if a faster, less reliable algorithm is used for tracking than for the first and/or second detection step. This is further advantageous because objects may be moving erratically, thereby leaving a vicinity-area-image under some conditions, which requires processing an entire image to locate the object again.

In some examples, the second detection step and/or detecting the at least one object in the vicinity-area-image further comprises estimating a motion parameter, preferably a velocity, of the at least one detected object (540) on the sub-image or vicinity-area-image, respectively. In this case, the method further comprises restarting the method by performing the first detection step on a further image temporally following the sub-image, or vicinity-area-image, respectively, if the estimated motion parameter is outside a predetermined interval. This provides an alternative way to estimate the confidence in the object detection. It is based on a detected motion of the detected one or more object. The motion parameter may include a velocity, which may be determined based on a distance between objects on temporally subsequent images. The motion parameter may include any value indicative of a velocity, a distance travelled, an acceleration, and/or a trajectory. When the estimated motion of the detected object is outside predefined motion parameters for the type detected object, the tracking of the detected object is assumed to have low confidence or to have failed, thus, no object may be detected in the vicinity-area-image.

In some examples, in such a case of detection failure when tracking, in other words when no object is detected in the vicinity-area-image, the next image may be selected from the sequence of images as the first image of a sequence of images; and the detection and tracking methods described above may be performed using the new first image.

In some examples, the method further comprises receiving the sequence of images from an image sensor. The sensor is preferably an electro-optic or infrared camera. In the examples, estimating of the motion parameter of the at least one detected object comprises determining a three-dimensional (3D) bounding box in a 3D space based on the bounding box of the detected object and camera parameters. Such camera parameters may include camera extrinsic and intrinsic properties. The camera properties may include the type of zoom, lenses and other similar properties. These properties allow determining a distance to the object. It is preferred if the estimation is further based on a classification and/or stored parameters of the detected object. In this way, identifying, e.g., a type of a drone allows determining a size, from which a distance can be inferred. The distance allows, together with the camera image, determining a 3D bounding box indicative of the object's position in 3D. The 3D bounding box may be used to determine a 3D velocity vector.

In some examples, predicting a position of the at least one detected object in the selected next image comprises the following steps:
- determining a velocity of the object; and
- multiplying the velocity by a time interval between a previous image and the next image to determine a shift in position.

Determining the velocity is preferably based on the distance between locations of the object in the two previous images, more preferably by multiplying the distance by a time interval between the two previous images. This is particularly advantageous in case of a small fast moving object. Since the motion is taken into account by specifying the vicinity-area-image at a predicted position, the vicinity-area-image can be of the same size as on a previous image. In particular, the size can be kept comparably small, which reduces the computational time needed to process the sub-image. Moreover, the example relates to a linear approximation of the motion of the object, which is reliable on short time intervals, such as between subsequent images.

According to a second aspect of the present disclosure, there is provided a computing device comprising one or more processing devices and a memory storing instructions which, when executed by the processing devices, cause the computer-implemented method of any preceding examples to be performed.

According to a third aspect of the present disclosure, there is provided a computer program product for loading into a memory of a computer, comprising instructions, that, when executed by a processor of the computer, cause the computer to execute the computer-implemented method of any of the preceding method examples.

According to a fourth aspect of the present disclosure, there is provided an object detection system comprising at least one image sensor and at least one computing device coupled with the image sensor; wherein the at least one computing device comprises one or more processing devices and a memory storing instructions which, when executed by the processing devices, cause the computer implemented method of any preceding examples to be performed.

### Brief Description of the Drawings

The features, objects, and advantages of the present disclosure will become more apparent from the detailed description set forth below when taken in conjunction with the drawings in which:
Fig. 1 is a schematic drawing of an exemplary object detection system 110.
Fig. 2 is a flow chart of a method of object detection.
Fig. 3 is a schematic diagram of partitioning the first image in image tiles.
Fig. 4 is a flow chart of a tracking method.
Fig. 5 is a schematic drawing of two images and illustrates an example of analysis of the movement of a detected object across the images.

### Detailed Description of Exemplary Embodiments

The present disclosure provides new methods, systems and devices for object detection and tracking. In some embodiments, images of an observed area are processed to detect objects that may be present in the observed area. Furthermore, the detected objects may be recognized. In some embodiments, upon detection of one or more objects of interest, the one or more objects may be tracked across multiple images.

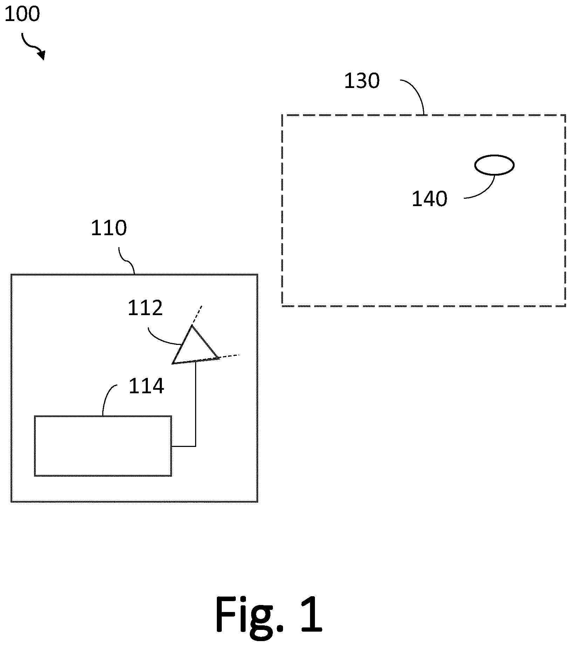

Fig. 1 schematically illustrates an exemplary deployment 100 of an object detection system 110 according to the present invention. The object detection system 110 may include an image sensor 112. Exemplary image sensors may include long-range electro optical cameras or infrared cameras. The image sensor may be further coupled with computing device 114.

The image sensor may be configured to take one or more images, in other words a sequence of one or more images, of a portion of the environment such as the exemplary portion 130 identified by the dotted line. When an object is present in said portion of the environment, then the object may appear in one or more of the images taken by the image sensor. An exemplary object 140 may be illustrated by the oval shape. Object 140 may be any object, such as a drone, a bird, or a faraway vehicle.

The image sensor 112 may transfer the one or more images to the computing device 114 for processing. In some embodiments, the transfer of images from the image sensor 112 to the computing device 114 may be considered a streaming process in which when the image sensor 112 takes an image, it transfers the image to the computing device, thus enabling the image taking process by the image sensor and the processing of the images while concurrently by the computing device 114 to process them concurrently or in parallel. In other embodiments, the images may be transferred in batch or other transfer processes or policies may be utilized.

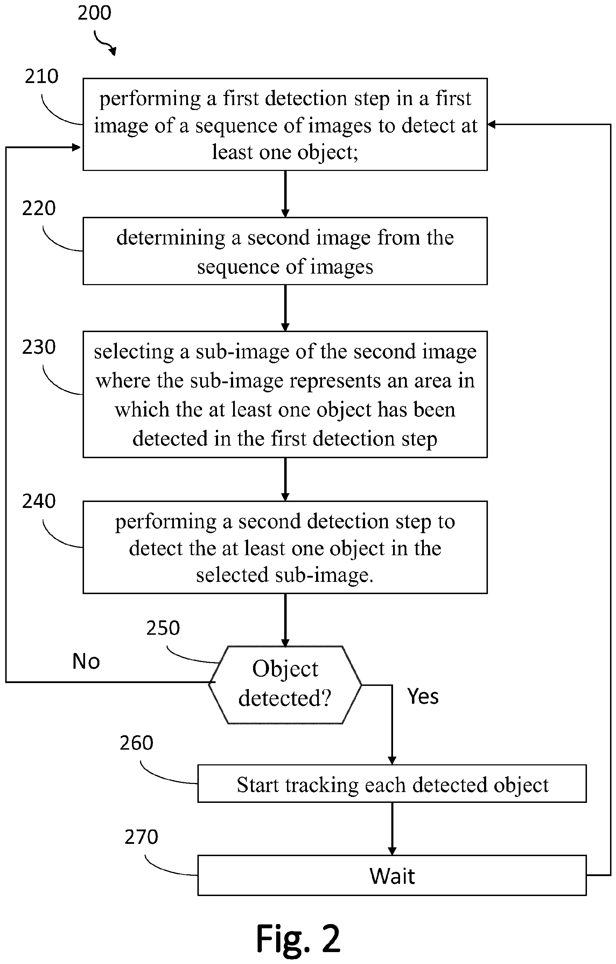

Fig. 2 illustrates a schematic block diagram 200 including the steps of a method for object detection performed by the computing device 114 to process the one or more images received from the image sensor 112.

In step 210, the computing device 114 may perform a first detection step to detect whether any object, such as object 140 of Fig. 1 is depicted in a first image of the one or more images and to determine the position of any object detected in the first image. Upon establishing the position of the detected objects in the first image, the first detection step may also determine the bounding box of the detected objects, where the bounding box may be an imaginary rectangle that outlines the object. In some embodiments, the first detection step may also perform the complete object recognition, wherein object recognition may also include the determination of the type of the detected objects. The determination of whether the first detection step may perform object recognition may depend on a fixed pre-configuration of the first detection step. However, such determination may also depend on the resources allocated to the first detection step and/or on constraints such as speed of detection and/or the number of objects displayed in the image.

In step 220, a second image may be determined from the sequence of images. In some embodiments, the second image may be the first image. In some embodiments, the second image may be the image immediately following the first image in temporal order. In other embodiments, the selections of the second image may be based on other criteria. However, any object detected by the first detection step in the first image, may be a moving object, thus the larger the temporal distance between the first and the second image, the larger may be movements of the detected object, and consequently, the more difficult to detect the object in the second image.

In step 230, the computing device 114 may select at least one sub-image of the second image. Each selected sub-image may be determined based on the bounding box of the object as determined by the first detection step and projected onto the second image, where projecting may include determining a bounding box in the second image that corresponds to the relative size and position of the bounding box within the first image or a bounding box centred in the relative position of the detected object in the first image, or a bounding box centred in the expected position of the detected object in the second image. Therefore, the detected object may be kept approximately in the centre of the sub-image. In some embodiments the sub-image may be restricted to the bounding box, in other embodiments it may be centred in the bounding box and include an area larger than the bounding box. In some embodiments, the sub-image may be rectangular, in other embodiments the sub-image may be round or of different shapes.

The size of the sub-image may be determined by trading the likelihood of detecting an object in the sub-image and the computational cost of computing the detection step inside the sub-image. The broader the sub-image, the higher the likelihood that the object is depicted in that sub-image, but also higher the computational cost of detecting the object in the sub-image. In some embodiments, the sub-image may be bound by a minimum size threshold or a maximum size threshold.

In step 240, the computing device 114 may perform a second detections step. The second detection step may be applied to each sub-image to detect whether at least an object is detected in the sub-image and detect the type of detected object. In some embodiments, the second detection step may be considered a verification step to verify the correctness of the detection of the first detection step. Since the second detection step is performed on a sub-image of the whole image the detection of the object and the recognition of the object may be performed faster without the overhead of analysing the whole image.

In some embodiments, to improve the recognition process of the second detection step, the sub-image corresponding to the sub-image may be altered for example by enlarging the sub-image, and/or increasing the resolution of the selected sub-image.

In some embodiments, the first and second detection steps may be based on the same detection process, while in other embodiments, the two detection steps may be based on different detection processes. For example, the first detection process may be based on a pre-trained Feature Pyramid Network, FPN, and the second detection step may be based on a detection system that is not based on FPN. In some embodiments, both detection processes may be based on different parametrizations or different pre-training of the same detection system. In some embodiments, the two steps may be based on different systems or different implementations of the object recognition algorithm.

In some embodiments, the first image may be partitioned into images tiles, and the first detection step may be performed in each of the image tiles independently. Therefore, the computational requirements of the first detection step may be reduced to detect objects in smaller image tiles. Furthermore, the detection step may be performed on each of the image tiles concurrently thus reducing the computing time of object detection and increasing its efficiency because smaller areas are searched.

In some embodiments, any object detected in steps 210 to 230 may be assumed to have been detected correctly. In other embodiments, a determination may be performed to verify whether the objects detected in steps 210 to 230 may have been detected correctly. The determination may be based on a degree of confidence on the detection that may be based on a degree of confidence of the first detection step, or of the second detection step, or a combination of the degree of confidence of the two detection steps.

The computed degree of confidence may be compared with a predefined minimum acceptable degree of confidence threshold. The adoption of the predefined minimum acceptable degree of confidence threshold may provide a way to minimise the false positive rate by discarding results that may be incorrect and/or unreliable. If the computed degree of confidence is below a predefined minimum acceptable degree of confidence threshold, the detected object is assumed to have been detected incorrectly, and thus discarded. Otherwise, the object is assumed to have been detected correctly.

If in step 250 a determination has been made that no object has been detected, then the detection process moves back to step 210 to select a new first image and proceed with the detection from the new first image.

If in step 240 at least one object has been detected, then in step 260 a tracking process according to algorithm 400 is started for each of the detected objects. It should be noted that the tracking process is optional. In embodiments, only steps 210-240 are repeated in a loop, irrespective of whether an object has been detected. This method allows obtaining an indication of an object and a position thereof at high reliability and accuracy. It is, however, preferred to combine method 200 with a tracking method 400 as explained below.

Upon starting the tracking process computing device 114 may execute step 260 and wait for a determined time that is longer than at least a complete execution of steps 410 to 460 or 470 of the tracking process. Upon completing the waiting time, the detection process may restart by selecting a new first image and executing step 210. Consequently, the determination of the new first image may depend on the tracking process. For example, when the tracking process is performed every n-th image in the sequence of images (in particular at every image frame), the first and second steps may be performed at every m-th image with m>n. Therefore, the next first image may be m-th image after the current first image in the sequence of images, and the next second image may be determined consequently as disclosed above.

This has the advantage that a tracking method, such as tracking method 400 may be executed by an algorithm that is computationally less complex and may be executed, even on hardware with limited computing power, at a high iteration rate, such as on every n-th image. By contrast, the method 200 is in these cases executed at a lower iteration rate to save computational resources.

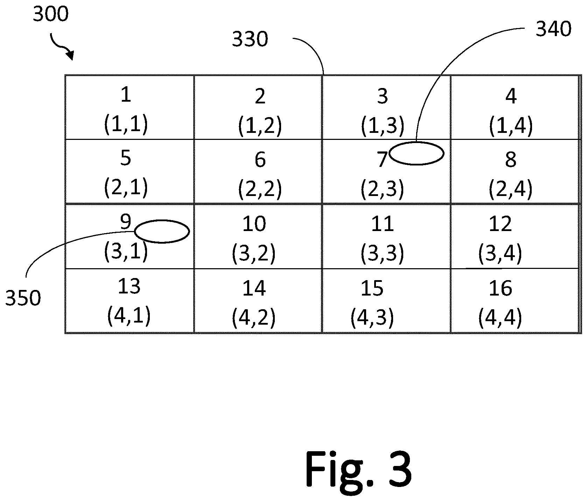

Fig. 3 illustrates an example 300 of an exemplary image 330, partitioned in 16 different image tiles along a 4 by 4 grid. The exemplary 16 different image tiles are indexed in two ways, which may be used alternatively or in combination: The upper indices run from numbers 1 to 16. The lower indices are coordinates of the (row, column) format, which allow determining neighbouring tiles in a straightforward manner. In some examples, the image may have a resolution of 8K, therefore each one of the 16 image tiles may have a full HD resolution.

The first detection step may then be performed in each one of the image tiles independently. In example 300, the first detection step may detect object 340 in image tile 7; and it may detect object 350 in image tile 9. Hence, the list of the objects detected by the first detection step may include both object 340 and object 350. In other words, the set of objects detected in the image may be the union of objects detected in each one of the applications of the first detection step to each of the sub-images.

In some embodiments, the image tiles of the selected image may be uniquely indexed, as exemplary tiles 1 to 16 of fig. 3. In some embodiments, the indexing may be based on the relative position of the tiles with respect to one another. This indexing of image tiles may indicate a unique index of the image and possibly the index of the images nearby. For example, in image 330, the image tile 6, may be indexed by indicating that the image tile 5 is on the left, that image tile 7 is on the right, that image tile 2 is above and that image tile 10 is below. In other embodiment, the image tiles may be indexed by their relative position in the grid. In this embodiment, the sub-image 6 may be indexed as (2,2), and the nearby image tiles may be simply derived from this initial index. In other words, image tile 5 may be (2,1), image tile 7 may be (2,3), image tile 2 may be (1, 2), and image tile 10 may be (3,2); thus, providing a unique indexing, and easy computation of the relative positioning.

In some embodiments in which the first image is divided into different image tiles, the sub-images of the second image for the second detection step may correspond to the image tile of the first image in which an object has been detected. Thus, in example 300, areas in the second image corresponding the image tiles 7 and 9 may also be considered the sub-images for the second detection step without the need to derive the sub-images from bounding boxes. However, in some embodiments, the sub-image of the second image for the second detection step may correspond to a sub-image of the corresponding image tile. In some embodiments, the sub-images of the second image may be independent of the first image tiling, and they may span across an area corresponding to multiple image tiles. In particular, when the detected object is close to a tile boundary or on the tile boundary, then the object bounding box and the corresponding sub-image may span across multiple tiles.

Upon a first object detection with the first and second detection steps, the object may need to be tracked across multiple images to monitor its behaviour. Analogously to the process discussed above, the tracking process may include a selection of an area in which the object may be located and a third detection step, which may be a single object tracking (SOT) step, which analogously to the first detection step attempts to locate the object in an image.

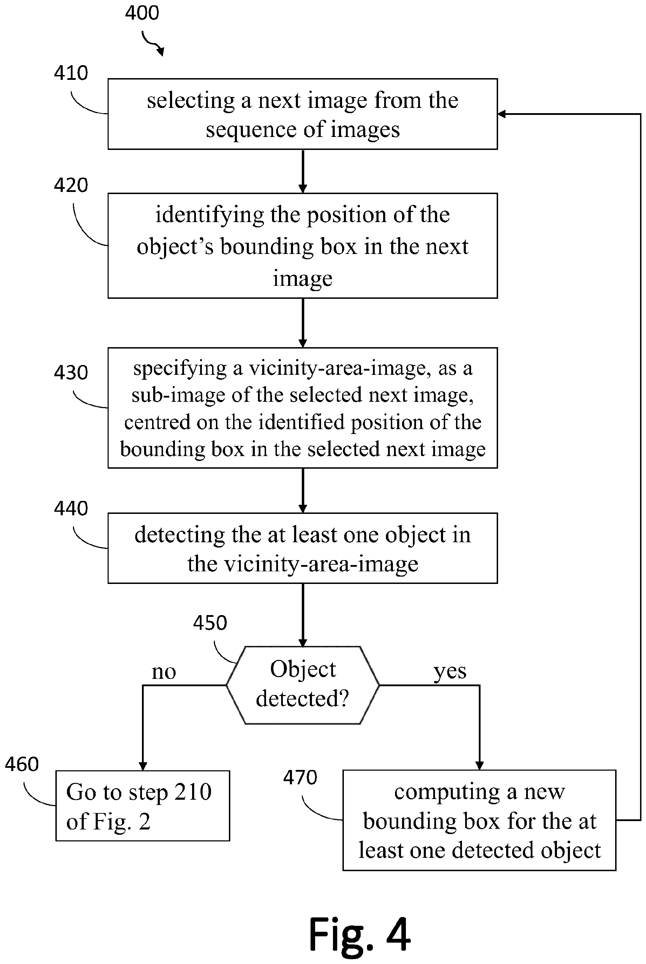

Fig. 4 illustrates a schematic block diagram 400 including the steps of a tracking method that may be performed by the computing device 114. The purpose of the tracking algorithm may be to track through time the behaviour of an object detected in the first and second detection steps according to algorithm 200 through time.

At step 410 of the tracking method, a next image may be selected from the one or more images. In some embodiments, the one or more images received from the image sensor 112 may be organized as a temporal sequence of images. In these embodiments the next image may be the image temporally following first image. Alternatively, the next image may be the last image of the sequence, which may be the most recent image received from image sensor 112. In other cases, the next image may be based on other criteria.

Upon the selection of the next image, in step 420 the position of the detected object's bounding box is identified in the next image. In other words, the bounding box of the detected object as identified in the first image is projected onto the next image.

In step 430 a vicinity area image is determined in the next image. The vicinity area image may be considered the area in the next image where the detected object may have moved to. The vicinity area image may be determined starting from the bounding box of the detected object as determined using the first or second detection step. In some embodiments, the vicinity area image may be determined by expanding the bounding box to select a larger area of the image. This expansion may be based on a predefined multiplying value, for example the vicinity area image may be five times larger than the bounding box. However, in some embodiments, the vicinity area image may be defined on the bases of estimates of the speed and direction of movement of the detected object. In some embodiments, the determination of the next area image may be based on any combination of knowledge about the tracked object, the location of the tracked object, the environment, and conditions in which the tacked object may be moving and possibly other information that may prove relevant to predict the location of the object.

In step 440, the computing device 114 may perform the third detection step to detect the location of the object in the vicinity area image. The third detection step may be based on any single object tracking algorithm.

In step 440, the third detection step, may report a degree of confidence indicating that the detected object has been identified in the vicinity area image. The degree of confidence may be reported by the single object tracking algorithm used by the third detection steps, and by motion filtering processes that may be derived analysing the movement of the detected object across images.

In step 450 a test may be performed to provides an indication of whether the detected object has been tracked correctly. In some embodiments, the evaluation of whether the detected object has been tracked correctly may be based on the computed degree of confidence computed in step 440. Thus, evaluating the degree of confidence of the detection and tracking provides a mechanism of self-monitoring. Specifically, the degree of confidence computed in step 440 may be compared with a predefined minimum acceptable degree of confidence threshold. The adoption of the predefined minimum acceptable degree of confidence threshold may provide a way to minimise the false positive rate by discarding results that may be incorrect and/or unreliable.

When the degree of confidence computed in step 440 is below a predefined minimum acceptable degree of confidence threshold, in step 460, the tracking process may be assumed to have failed because the detected object is not detectable anymore. Therefore, in step 460 a failure recovery may be started by triggering a new search of the detected object on a complete image. Thus, in step 460 the computing device 114 stops the tracking process and it moves to step 210 of Fig. 2 to select a new first image that temporally follows the next image selected in step 410 in the sequence of images; and to performing the first and second detection steps on the newly selected first image.

When the degree of confidence computed in step 440 is above the predefined minimum acceptable degree of confidence threshold, in step 470 the tracking process may be repeated by returning to step 410 to select a new next image to be used to continue tracking the detected object.

In some embodiments, the new next image may be the first image after the next image in temporal order. However, depending on different factors including computational resources, number of objects to track, and possibly other reasons, the tracking process may be performed less frequently. For example, the third detection step may be performed every n images, where n may be any integer. Thus, step 410 may select the nth image after the next image to be the new next image on which to apply steps 420 to 440.

The verification step 450 may include other conditions in addition to measuring the level of the degree of confidence. For example, the verification may also include an analysis of the movement of the detected object in 2D and 3D spaces.

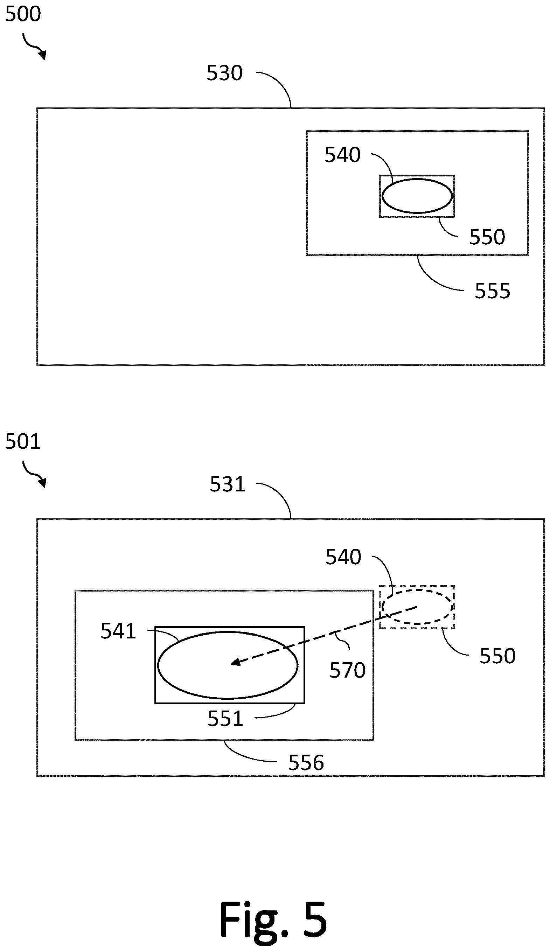

Fig. 5 illustrates an example of analysis of the movement of the detected object in 2D and 3D spaces as detected across images. The technique shown in Fig. 5 may be applied in method 400 of tracking an object, such as object 540. Illustration 500 shows an image 530 detected at a time t1. Image 530 displays a detected and tracked object 540 and the bounding box 550 of object 540. The object 540 has been detected on a sub-image 555. Sub-image 555 is larger than the bounding box 550 around object 540 by a factor of three in this example.

In addition, Fig. 5 includes a second illustration 501 showing an image 531 detected at a time t2 which may be later than time t1. Image 531 depicts an object 541 that may be the image of a tracked object 540 at time t2 and the bounding box 551 of object 541. The dotted shapes 542 and 552 indicate the previous position of object 540 and its bounding box 550 as detected in image 530.

Although images 530 and 531 are 2D images, an analysis of the bounding boxes 550 and 551 of the object 540 in the context of the intrinsic and extrinsic properties of the image sensor such as the lenses, zoom levels, and prior knowledge of the object may provide a way to estimate the distance of the object 540 from the image sensor and the trajectory of object 540. Properties of the image sensor may include the type of lenses, zoom levels, and orientation of the sensor, while prior knowledge of the object may include dimensions or the object and other properties that may be related to the object. For example, the difference in dimensions of bounding boxes 550 and 551 may indicate that the object is moving closer to the image sensor, and the different position of the bounding boxes 550 and 551, as indicated by line 570, may indicate that direction of movement of object 540 between time t1 and time t2. Thus, effectively, images 500 and 501 may enable the analysis of the movements of the object in the 2D space an in a 3D space.

In embodiments, the direction of movement 570 has been predicted based on the position of object 540 at time t1 and knowledge about its velocity, based on its position at an earlier time. The prediction allows setting a sub-image 556 such that the object 541 is expected to be within the bounding box 556 at t2, and processing sub-image 556 then allows to locate the object on the position. The information about the 3D position allows setting a size of the sub-image 556 to be larger than the size of sub-image 555 to account for the fact that the object 541 on image 531 is closer and therefore larger. However, the size of the sub-image 556 is only two times the size of the bounding box in order not to exceed the available computing capacities. Such limitation may be effected by an appropriate definition of an upper threshold of the size of the sub-image 556. This approach is particularly advantageous for tracking the object, which is preferably done in fast iterations (preferably at a frame rate of a camera) and therefore puts strict limits on the available compute time.

Estimates about 3D movements of the object not only increase the information that may be extracted from the images during object tracking, but they may also provide hints on whether the correct object has been detected. An analysis of the estimated movements of the object may reveal whether they are consistent with the capabilities of the object. If the estimated speed of the object is unrealistic for the detected object, then the tracking process may be failing. In other words, estimates derived in the 2D and 3D space may be used as a further measure of confidence in the results of the detected object tracking. This information may be used in step 450 to decide whether to continue the tracking the object thus performing step 470 or restart the detection process by performing step 460.

### Reference signs

- 100: Deployment
- 110: Object detection system
- 112: Image sensor
- 114: Computing device
- 130: Portion of the environment
- 140: Object
- 200: Method
- 210-270: Steps of method 200
- 300: Example
- 330: Image
- 340: Object
- 350: Object
- 400: Method
- 410-470: Steps of method 400
- 500: Illustration
- 530: First image
- 540: Tracked object at time t1
- 541: Tracked object at time t2
- 550: Bounding box of the object at time t1
- 551: Bounding box of the object at time t2
- 501: Second illustration
- 531: Second image
- 570: Direction of movement

## Claims

1. A computer-implemented method (200) for object detection, the method comprising:
performing (210) a first detection step in a first image (530) of a sequence of images to detect at least one object (540);
determining (220) a second image (531) from the sequence of images, wherein the second image (531) is the same first image (530) or temporally follows the first image (530);
selecting (230) a sub-image (556) of the second image (531) at an area in which the at least one object (540) has been detected in the first detection step; and
performing (240) a second detection step to detect the at least one object (540) in the selected sub-image (556).

2. The computer-implemented method of claim 1, wherein selecting (230) said sub-image (556) of the second image (531) comprises:
determining a bounding box (550) of the at least one object (540) that has been detected in the first detection step;
projecting said bounding box onto the second image (531); and
determining the sub-image (556) of the second image (531) as a sub-image (556) of the second image (531) centred on the projected position of the bounding box in the second image (531),
wherein a size of the sub-image (556) is preferably based on a size of the bounding box.

3. The computer-implemented method of any preceding claim, wherein the first and second detection steps are based on different detection processes.

4. The computer-implemented method of any preceding claim, further comprising:
selecting respective one or more subsequent sub-images (555, 556) of one or more subsequent images temporally following the second image (531) of the sequence of images, wherein relative sizes and/or positions of the subsequent sub-images (555, 556) within the subsequent images are updated for each subsequent sub-image (555, 556) or respectively correspond to a relative size and/or position of the sub-image (555, 556) within the second image (531); and
tracking the detected at least one object (540) within the subsequent sub-images (555, 556).

5. The computer-implemented method of any preceding claim, wherein the method further includes:
partitioning the first image (330) into image tiles;
wherein performing the first detection step in the first image (330) to detect at the least one object (340) further includes:
performing the first detection step in each of the image tiles to detect the at least one object (340).

6. The computer-implemented method of claim 5, wherein the first detection step is performed concurrently on all image tiles.

7. The computer-implemented method of claim 5 or 6, further comprising indexing the image tiles of the first image (330) based on their relative position to one another.

8. The computer-implemented method of any preceding claim, wherein:
the size of the sub-image (555, 556) is determined to range between an upper threshold and a lower threshold; and
the lower threshold and the upper threshold are predetermined based on a likelihood of detecting the at least one object (540) in the selected sub-image (555, 556) when performing the second detection step and/or the computational cost of performing the second detection step.

9. The computer-implemented method of any preceding claim, further comprising:
tracking the at least one object (540) in the sequence of images based on outputs of the first and second detection steps;
wherein tracking the at least one detected object (540) preferably comprises iteratively executing the following steps:
selecting (410) a next image from the sequence of images;
predicting (420) a position of the at least one detected object (540) in the selected next image;
specifying (430) a vicinity-area-image as a sub-image (555, 556) of the selected next image, centred on the predicted position of the at least one detected object in the selected next image, preferably wherein the size of the vicinity-area-image is based on the size of the or a bounding box of the detected object;
detecting (440) the at least one object (540) in the vicinity-area-image; and
preferably, computing (470) a new bounding box of the at least one detected object (540) in the vicinity-area-image for a subsequent iteration.

10. The computer-implemented method of any preceding claims:
wherein the first and/or second detection step and/or detecting the at least one object in the vicinity-area-image further comprises computing a confidence value of the detection of the object on the first image, sub-image (555, 556), or vicinity-area-image, respectively; and
wherein the method further comprises restarting the method by performing the first detection step on a further image temporally following the first image, sub-image (555, 556), or vicinity-area-image, respectively, if the confidence value is below a predefined threshold.

11. The computer-implemented method of any preceding claims,
wherein the second detection step and/or detecting the at least one object (540) in the vicinity-area-image further comprises estimating a motion parameter, preferably a velocity, of the at least one detected object (540) on the sub-image (555, 556) or vicinity-area-image, respectively; and
wherein the method further comprises restarting the method by performing the first detection step on a further image temporally following the sub-image (555, 556), or vicinity-area-image, respectively, if the estimated motion parameter is outside a predetermined interval.

12. The computer-implemented method of claim 11, further comprising receiving the sequence of images from an image sensor, preferably an electro-optic or infrared camera, wherein estimating of the motion parameter of the at least one detected object (540) comprises determining a three-dimensional bounding box in a three-dimensional space based on the bounding box of the detected object (540) and camera parameters and, preferably, a classification and/or stored parameters of the detected object(540) .

13. The computer-implemented method of any of claims 9-12, wherein predicting (420) a position of the at least one detected object (540) in the selected next image comprises:
determining a velocity of the object, preferably based on the distance between locations of the object in the two previous images; and
multiplying the velocity by a time interval between a previous image and the next image to determine a shift in position.

14. A computing device comprising one or more processing devices and a memory storing instructions which, when executed by the processing devices, cause the computer-implemented method of any preceding claim to be performed,
wherein the computing device is preferably comprised in an object detection system comprising at least one image sensor, preferably a camera, communicatively coupled to the computing device.

15. A computer program product for loading into a memory of a computer, comprising instructions, that, when executed by a processor of the computer, cause the computer to execute the computer-implemented method of any of the claims 1-13.
